# EUROPÄISCHE PATENTSCHRIFT

(11) **EP 2 673 878 B1**
(45) Veröffentlichungstag und Bekanntmachung des Hinweises auf die Patenterteilung: **09.12.2015**
(21) Anmeldenummer: 12703783.6
(22) Anmeldetag: 08.02.2012
(51) Int. Cl.: A47C 20/04, H02P 29/00, H02H 3/12, H02J 9/06, H02M 1/00

(54) **ELEKTROMOTORISCHER MÖBELANTRIEB MIT EINER ENERGIEVERSORGUNGSEINRICHTUNG**
ELECTRIC-MOTOR FURNITURE DRIVE HAVING A POWER SUPPLY DEVICE
ENTRAÎNEMENT DE MEUBLE À MOTEUR ÉLECTRIQUE COMPORTANT UN DISPOSITIF D'ALIMENTATION EN ÉNERGIE

(30) Priorität: 09.02.2011 DE 102011000602
(43) Veröffentlichungstag der Anmeldung: 18.12.2013
(73) Patentinhaber: DewertOkin GmbH, 32278 Kirchlengern (DE)
(72) Erfinder: HILLE, Armin, 33659 Bielefeld (DE)
(74) Vertreter: Dantz, Jan Henning
(86) Internationale Anmeldenummer: PCT/EP2012/052106
(87) Internationale Veröffentlichungsnummer: WO 2012/107474

(56) Entgegenhaltungen:
- EP-A2- 0 887 904
- WO-A1-88/05220
- DE-T2- 69 510 221
- DE-U1- 29 816 022

## Beschreibung

Die Erfindung betrifft einen elektromotorischen Möbelantrieb mit einer Energieversorgungseinrichtung zum Verstellen von beweglichen Möbelbauteilen relativ zueinander.

Derartige elektromotorische Möbelantriebe sind in unterschiedlichen Ausführungsformen bekannt. Sie sind als Linearantriebe mit einem linear verstellbaren Abtriebsglied oder als Rotationsantriebe mit einem rotierenden Abtriebsglied ausgebildet und haben sich in der Praxis bestens bewährt. Die Linearantriebe weisen einen oder eine Anzahl Elektromotore auf, wobei jedem Motor ein Drehzahlreduziergetriebe und einem weiteren dem Drehzahlreduziergetriebe nachgeschaltetem Getriebe beispielsweise in Form eines Gewindespindelgetriebes nachgeschaltet ist, welches aus der Drehbewegung des Motors eine Linearbewegung des Abtriebsgliedes erzeugt. Die Rotationsantriebe weisen wenigstens ein dem jeweiligen Elektromotor nachgeschaltetes Drehzahlreduziergetriebe auf, wobei das letzte Getriebeglied das Abtriebsglied bildet. Das Abtriebsglied des jeweiligen elektromotorischen Möbelntriebs steht mit einem festen und/oder mit einem beweglichen Möbelbauteil in Verbindung, so dass bei einem Betrieb des Elektromotors die beweglichen Möbelbauteile relativ zueinander verstellt werden. Dabei kann das Möbel als Lattenrost, Arbeitstisch, Bett, Liegefläche, Behandlungsliege, Krankenhaus- bzw. Pflegebett, sowie auch als eine Hubeinrichtung für Personen wie Lifter oder Patiententifter ausgebildet sein.

Zum Betrieb der elektromotorischen Möbelantriebe haben sich Schaltnetzteile als Energieversorgungseinrichtungen bestens bewährt. Die Energieversorgungseinrichtung weist einen Betriebszustand Aus bei Trennung vom Netz und einen Betriebszustand Betrieb im regulären Betrieb auf. Die Schaltnetzteile besitzen einen von einem Steuerbaustein mit hoher Frequenz geschalteten Trenntransformator, welcher auch als Übertrager oder als Hochfrequenztransformator bezeichnet werden kann, der durch einen vorgeschalteten Halbleiterschalter auf der Primärseite mit einer hohen Schaltfrequenz ein- und ausgeschaltet wird. Dazu ist dem Steuerbaustein ein gesonderter Zwischenkreis zugeordnet, weicher eine Energiequelle des Steuerbausteins aufweist und den Steuerbaustein mit einer elektrischen Energie versorgt.

Das Dokument DE 10 2006 049 715 A1 illustriert ein Netzteil für motorische Antriebe, welches in einem Steckergehäuse als Schaltnetzteil ausgebildet ist.

Es sei noch der Stand der Technik eines Netzfreischalters oder einer übergeordneten Netzfreischaltung erörtert. Der Netzfreischalter, z.B. einer Wohnung, ist zwischen der Wohnungsinstallation und dem öffentlichen Energieversorgungsnetz eingesetzt und erfasst, ob ein elektrischer Verbraucher, z.B. Licht, eingeschaltet oder ausgeschaltet ist. Mit der Wohnungsinstallation ist die elektrische Verdrahtung der Wohnung für die Netzspannung gemeint. Sobald kein elektrischer Verbraucher mehr eingeschaltet ist, trennt der Netzfreischalter die Wohnungsinstallation vom öffentlichen Energieversorgungsnetz. Dann erzeugt der Netzfreischalter eine Prüfspannung, z.B. eine ungefährliche Gleichspannung bestimmter Höhe und schaltet diese auf die Wohnungsinstallation. Wird nun ein Verbraucher eingeschaltet, erkennt dies die Prüfspannung und bewirkt, dass der Netzfreischalter die Wohnungsinstallation wieder mit dem öffentlichen Energieversorgungsnetz verbindet. Ein solcher Netzfreischalter kann auch bereichsweise oder jeweils für ein Zimmer verwendet werden.

Der Erfindung liegt die Aufgabe zugrunde, einen verbesserten elektromotorischen Möbelantrieb mit einer Energieversorgungseinrichtung der eingangs näher beschriebenen Art zu schaffen.

Die Lösung wird bei einem elektromotorischen Möbelantrieb mit einer Energieversorgungseinrichtung mit den Merkmalen des Anspruchs 1 gelöst.

Die Energieversorgungseinrichtung kann in ihrem Betriebszustand eine ausgangsseitige Betriebsspannung und in ihrem Ruhezustand anstelle der Betriebsspannung eine ausgangsseitige Ruhespannung an ihrem Ausgang bereitstellen. Dadurch kann bewirkt werden, dass im Ruhezustand mit der Ruhespannung eine ungefährliche und besonders energiesparende Sicherheitskleinspannung als Prüfspannung für den elektromotorischen Möbelantrieb zur Verfügung steht. Zusätzliche Hilfsspannungsquellen in Form von Batterien oder Kondensatoren sind nicht erforderlich.

Demgemäß ist ein elektromotorischer Möbelantrieb mit einer Energieversorgungseinrichtung und mit einer Handbedienung zum Verstellen von beweglichen Möbelbauteilen relativ zueinander geschaffen, wobei der elektromotorische Möbelantrieb wenigstens einen drehrichtungsumkehrbaren Elektromotor aufweist, wobei jedem Elektromotor ein Drehzahlreduziergetriebe nachgeschaltet ist und wobei jedem Drehzahlreduziergetriebe ein weiteres Getriebe nachgeschaltet ist, und wobei die Energieversorgungseinrichtung einen Netzanschluss aufweist, welcher mit dem Netz verbindbar ausgebildet ist, wobei die Energieversorgungseinrichtung die netzseitige Eingangsspannung in mindestens eine ausgangsseitige Kleinspannung transformiert, und einen Trenntransformator oder eine Übertragungseinheit zur galvanischen Trennung zwischen der netzgebundenen Eingangsseite und der kleinspannungsgebenden Ausgangsseite zum Betrieb des elektromotorischen Möbelantriebs aufweist, wobei die Energieversorgungseinrichtung nach Art eines Schaltnetzteils ausgebildet ist und einen Zwischenkreis, eine Steuereinrichtung zur Steuerung des Schaltnetzteils und eine Sekundäreinheit aufweist, wobei die Energieversorgungseinrichtung einen Betriebszustand im regulären Betrieb des elektromotorischen Möbelantriebs und einen Ruhezustand aufweist, wenn der elektromotorische Möbelantrieb unbetätigt ist. Die Energieversorgungseinrichtung stellt in ihrem Betriebszustand eine ausgangsseitige Betriebsspannung und in ihrem Ruhezustand anstelle der Betriebsspannung eine ausgangsseitige Ruhespannung an ihrem Ausgang bereit.

Damit kann der elektromotorische Möbelantrieb mit dieser Energieversorgungseinrichtung auch einen äußerst geringen Energieverbrauch in einem Stand-By-Betrieb aufweisen, in welchem er an ein elektrisches Versorgungsnetz angeschlossen ist und für eine Betätigung bereit ist. So kann auch die Forderung nach geringem Energieverbrauch von Geräten im Stand-By-Betrieb erfüllt werden.

In einer Ausgestaltung kann die Energieversorgungseinrichtung weiterhin eine Lasterkennungseinheit mit einem Sensor, und einen Steuerblock aufweisen, wobei der Steuerblock mit einer Referenzspannungsspannungseinheit der Sekundäreinheit verbunden ist und zur Umschaltung der ausgangsseitigen Betriebsspannung in die ausgangsseitige Ruhespannung ausgebildet ist. Damit kann eine einfache und sichere Erkennung von Lastzuständen geschaffen werden, die den Betriebszustand und den Ruhezustand eindeutig erfassen kann. Die Referenzspannungseinheit der Sekundäreinheit kann verwendet werden, um die unterschiedlichen Spannung zu erzeugen. Es sind nur wenige Bauteile zusätzlich notwendig.

In einer alternativen Ausführung kann die Energieversorgungseinrichtung weiterhin eine Lasterkennungseinheit mit einem Sensor, und einen Steuerblock aufweisen, wobei der Steuerblock mit einer Umschalteinheit der Sekundäreinheit zur Umschaltung der ausgangsseitigen Betriebsspannung in die ausgangsseitige Ruhespannung verbunden ist. Eine einfache Umschaltung kann so möglich sein, wenn schon zwei Spannungen vorhanden sind bzw. erzeugt werden.

Die Umschalteinheit kann ein Schaltelement aufweisen, welches im stromlosen Zustand ausgangsseitig die Ruhespannung auf den Ausgang der Energieversorgungseinrichtung schaltet. Das Schaltelement kann z.B. ein Relais oder/und ein Halbleiterschalter sein.

Die Lasterkennungseinheit kann einen Vergleicher aufweisen. Je nach Umfang eines solchen Vergleichers können nicht nur der Betriebszustand und der Ruhezustand eindeutig erfasst und eingestellt werden, sondern auch Zwischenzustände können erkennbar sein.

Der Vergleicher kann mit einer Referenzeinheit verbunden sein, wodurch Zustände besser erfassbar sein können.

Eine noch bessere Erfassbarkeit und Unterscheidung kann erzielt werden, wenn die Referenzeinheit eine Konstantstromquelle umfasst. Diese Konstantstromquelle der Referenzeinheit kann dazu zwei parallele Strompfade mit einem Paar von pnp-Transistoren und einem Paar npn-Transistoren aufweisen. Damit können besonders kleine Ströme, z.B. im Mikroamperebereich, beherrschbar sein und können auch bei geringen Ruhespannungen zufriedenstellende Ergebnisse liefern. Eine solche Konstantstromquelle kann auch diskret mit einfachen Bauteilen kostengünstig aufgebaut werden. Ein weiterer Vorteil kann darin bestehen, dass auch im Falle von Prüfspannungen von Netzfreischaltern mit sich daraus ergebenden niedrigen Ruhespannungen im Ruhezustand der Energieversorgungseinrichtung eine eindeutige Lasterkennung möglich sein kann und eine Funktionalität des Netzfreischalters beibehalten werden kann.

In einer weiteren Ausführung kann ein Spannungsregler zur Erzeugung der Ruhespannung vorgesehen und mit der Betriebsspannung als Eingangsspannung verbunden sein. Dieser Spannungsregler kann ein handelsübliches und somit kostengünstiges Bauteil sein.

In einer alternativen Ausführung kann die Ruhespannung ständig mit dem Ausgang der Energieversorgungseinrichtung verbunden sein, wobei im Betriebszustand die Betriebsspannung hinzugeschaltet werden kann. Dadurch können Bauteile eingespart werden, es ist z.B. nur ein Schließkontakt und kein Umschaltkontakt erforderlich.

In einer weiteren Ausführung kann die Energieversorgungseinrichtung eine Anzeigeeinheit zur Anzeige der Betriebsspannung und der Ruhespannung aufweisen. Es können dazu Zweifarben-LED verwendet werden, um Bauraum zu sparen und eindeutige Anzeigen zu erhalten. In einer bevorzugten Ausführungsform ist die erste LED als permanent grün leuchtende LED ausgebildet und die zweite LED als zuschaltbare rot leuchtende LED ausgebildet, wobei in einer weiteren Ausführungsform an wenigstens einer LED ein Vorwiderstand angeschlossen ist. Bei einem Betrieb beider LED gibt die Zweifarben-LED ein Mischlicht aus, welches durch eine gelbe Farbe gebildet sein kann und welches durch Anpassung des wenigstens einen Vorwiderstandes veränderbar ausgebildet ist.

In einer noch weiteren Ausführung kann die Energieversorgungseinrichtung mit einer schaltbaren und/oder veränderlichen Anfangslast versehen sein, welche so ausgebildet und so an die Anschlüsse eines Netzkabels vorübergehend anschließbar ist, dass eine eindeutige Erkennung des Betriebszustands der Energieversorgungseinrichtung für einen Netzfreischalter gebildet ist. Damit kann der Einsatzbereich mit Netzfreischaltern unterschiedlicher Bauart erweitert werden.

Die Motorsteuerung oder/und die Handbedienung können mit einer Hilfsenergiequelle versehen werden, wodurch auch eine Notabsenkung möglich sein kann.

Die Hilfsenergiequelle kann dabei eine Batterie, ein Akkumulator oder/und ein Kondensator sein.

Wenn die Ruhespannung z.B. 3 oder 5 V beträgt, kann es damit möglich sein, dass dies ausreichend sein kann, um einen weiteren sicheren Betrieb von z.B. Funktionselementen wie Prozessoren der Motorsteuerung und Fehlermeldung oder Signalempfänger wie Funkempfänger oder Infrarotempfänger oder eine Anzeigeeinrichtung oder eine Buseinrichtung beizubehalten.

Die Betriebsspannung weist ein deutlich höheres Potential auf und liegt typischerweise um 30 V, in anderen Ausführungen im Bereich von 24 V bis 40 V. Der besondere Vorteil in einer Umschaltung und/oder Bereitstellung der Ruhespannung am Ausgang der Energieversorgungseinrichtung liegt darin, dass zur Spannungsversorgung der eingangs beschriebenen Funktionselemente diese Ruhespannung verwendet werden kann, somit auf separate Spannungsversorgungsschaltungen der Funktionselemente verzichtet werden kann, und dadurch der Montageaufwand des elektromotorischen Möbelantriebs und seiner Einzelkomponenten deutlich reduziert ist. Darüber hinaus weisen elektromotorische Möbelantriebe des Standes der Technik gemäß ihrer Natur einen deutlich höheren Stand-By-Verbrauch auf, da sie verlustreiche Spannungsregler- oder Stromteilerschaltungen aufweisen, um die eingangs beschriebenen Funktionselemente, welche nicht mit der hohen Betriebsspannung betrieben werden können, an die Betriebsspannung anzupassen.

Eine weitere Ausführung sieht eine Energieversorgungseinrichtung mit zwei ausgangsseitigen Spannungen vor, wobei wenigstens eine Spannung, beispielsweise in Form der Ruhespannung, permanent anliegt und die andere Spannung, beispielsweise in Form der Betriebsspannung, zuschaltbar ausgebildet ist. Dabei weist der Ausgang der Energieversorgungseinrichtung in einer ersten und vereinfachten Ausführungsform zwei Anschlüsse auf, an welchen die Ruhespannung und die zuschaltbare Betriebsspannung anliegt. Eine weitere Ausführungsform der Energieversorgungseinrichtung weist einen Ausgang in Form von drei Anschlüssen auf, wobei über zwei Anschlüssen die Ruhespannung anliegt und der dritte Anschluß gegenüber einem der anderen Anschlüsse das Potential der Betriebsspannung aufweist. Eine weitere und ergänzende Ausführungsform der Energieversorgungseinrichtung weist einen Ausgang in Form von vier Anschlüssen auf, wobei über zwei Anschlüsse die Ruhespannung anliegt und über zwei weitere Anschlüsse die Betriebsspannung anliegt. Somit kann der Ausgang der Energieversorgungseinrichtung als zweipoliger, als dreipoliger oder als vierpoliger Anschluß ausgebildet sein.

Das Versorgungskabel kann in einer so genannten Zweidrahtausführung aus zwei Versorgungsleitungen bzw. -Drähten bestehen. Bei einer so genannten Dreidrahtausführung sind es drei Leitungen, und bei einer so genannten Vierdrahtausführung weist das Versorgungskabel vier Leitungen auf.

Bei der Zweidrahtausführung sind die zwei Leitungen des Versorgungskabel als Plus- und Minusleitung sowohl für die Betriebsspannung als auch für die Ruhespannung ausgebildet.

Im Falle der Dreidrahtausführung ist zusätzlich zu der Plus- und Minusleitung eine Steuerleitung vorhanden, welche ein von dem Handschalter erzeugtes Steuersignal bei Betätigung desselben führt und ein Umschalten der Energieversorgungseinrichtung von der Betriebsspannung auf die Ruhespannung und umgekehrt bewirkt. Dabei wird eine von den beiden Leitungen, die als Plus- und Minusleitung vorgesehen sind, als gemeinsame Leitung (z.B. Masseleitung für das Steuersignal).

Bei der Vierdrahtausführung ist die vierte Leitung die Masseleitung für das Steuersignal, wobei Steuerleitungen und Plus- und Minusleitung separat ausgeführt sind und keine gemeinsame Leitung benutzen.

Weitere Kennzeichen und Merkmale ergeben sich aus der nachfolgenden Beschreibung eines bevorzugten Ausführungsbeispiels und sind Gegenstand weiterer Unteransprüche.

Anhand der beigefügten Zeichnungen wird die Erfindung noch näher erläutert. Es zeigen:
- Figur 1: eine beispielhafte und schematische Darstellung eines als Linearantrieb ausgebildeten erfindungsgemäßen Möbelantriebs mit einer Energieversorgungseinrichtung;
- Figur 2: ein schematisches Blockschaltbild eines Ausführungsbeispiels der Energieversorgungseinrichtung nach Figur 1;
- Figur 3: ein schematisches Blockschaltbild eines ersten Ausführungsbeispiels einer Lasterkennungseinheit der Energieversorgungseinrichtung nach Figur 2;
- Figur 4: ein schematisches Blockschaltbild eines zweiten Ausführungsbeispiels einer Lasterkennungseinheit der Energieversorgungseinrichtung nach Figur 2;
- Figur 5: ein schematischer Schaltplan einer Referenzeinheit der Lasterkennungseinheit nach Figur 4;
- Figur 6: ein schematisches Blockschaltbild eines Ausführungsbeispiels einer Umschalteinheit der Energieversorgungseinrichtung nach Figur 2; und
- Figur 7: ein schematisches Blockschaltbild eines Ausführungsbeispiels einer Erzeugung einer Ruhespannung der Energieversorgungseinrichtung nach Figur 2.

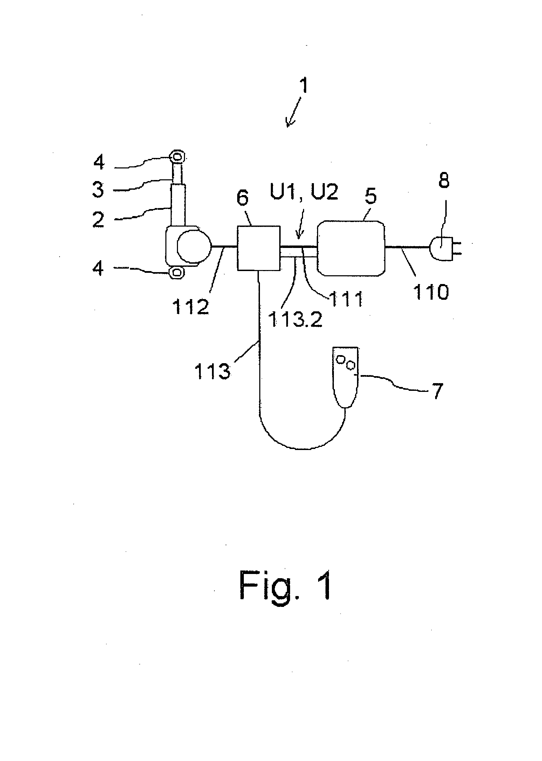

Die Figur 1 zeigt einen elektromotorischen Möbelantrieb 1 mit einer Energieversorgungseinrichtung 5.

Der elektromotorische Möbelantrieb 1 ist in diesem Ausführungsbeispiel ein sogenannter Linearantrieb 2, und die Energieversorgungseinrichtung 5 ist als Schaltnetzteil ausgebildet. Der Linearantrieb 2 weist je nach Drehrichtung eines nicht näher dargestellten Elektromotors ein ein- und ausfahrbares Hubrohr 3 auf, an dessen freies Ende ein Anschlussteil in Form eines Gabelkopfes 4 angebracht ist. Ein weiteres Anschlussteil in Form eines weiteren Gabelkopfes 4 ist an dem Gehäuse des Linearantriebs 2 befestigt. Das jeweilige Anschlussteil steht in nicht näher dargestellter Weise mit jeweils einem Möbelbauteil in Verbindung, so dass sich bei Betrieb des Elektromotors die an dem Linearantrieb 2 angeschlossenen Möbelbauteile relativ zueinander bewegen.

Die Energieversorgungseinrichtung 5 ist gemäß der Darstellung nach Figur 1 über ein Netzkabel 110 mit einem Netzstecker 8 verbunden, wobei in einer anderen und nicht näher dargestellten Ausführungsform der Netzstecker 8 an der Energieversorgungseinrichtung 5 angeordnet sein kann. Es sei noch erwähnt, dass die Energieversorgungseinrichtung 5 gemäß der Darstellung nach Figur 1 mit einem umhüllenden Gehäuse versehen ist, so dass der Netzstecker 8 an dem Gehäuse angesetzt oder angeformt sein kann.

Ein Ausgang der Energieversorgungseinrichtung 5 ist über ein Versorgungskabel 111 mit einer Motorsteuerung 6 verbunden, an welche der Linearantrieb 2 (auch stellvertretend für mehr als einen Linearantrieb 2) mit einem Motorkabel 112 angeschlossen ist.

Ferner ist die Energieversorgungseinrichtung 5 in einer Variante, einer so genannten Dreidrahtausführung, zusätzlich durch eine Steuerleitung 113.2 mit der Motorsteuerung 6 verbunden. Diese Variante wird weiter unten noch näher erläutert.

An der Motorsteuerung 6 ist eine Handbedienung 7 in drahtgebundener Form mit einem Bedienungskabel 113 angeschlossen, wobei gemäß der Darstellung nach Figur 1 die Handbedienung 7 zwei Drucktaster aufweist. Gemäß einer anderen nicht näher dargestellten Ausführungsform ist die Handbedienung 7 über eine drahtlose Übertragungsstrecke mit der Motorsteuerung 6 gekoppelt und sendet Funkwellen oder infrarote Lichtwellen zur Steuerung des wenigstens einen Elektromotors, d.h. Linearantriebs 2 an die Motorsteuerung 6.

Gemäß der Darstellung nach Figur 1 steht in einer ersten Ausführungsform die Handbedienung 7 mit einer Motorsteuerung 13 in Verbindung, wobei die Motorsteuerung 6 als Relaissteuerung mit Relaisschaltern oder/und als Halbleiterschaltung mit Halbleiterschaltern ausgebildet ist. Die manuell betätigbaren Tastschalter der Handbedienung 7 schalten dabei den Steuerstrom der Relaisschalter bzw. der Halbleiterschalter, wobei die Leistungsschalter der Relaisschalter bzw. der Halbleiterschalter den hohen Motorstrom des Linearantriebs 2 schalten.

Gemäß der Darstellung der Figur 1 steht in einer zweiten Ausführungsform die Handbedienung 7 mit der Motorsteuerung 6 in Verbindung, welche das Versorgungskabel 111 der Energieversorgungseinrichtung 5 und ein Motorkabel 112 des Elektromotors des Linearantriebs 2 und die elektrischen Leitungen der manuell betätigbaren Tastschalter der Handbedienung 7 miteinander verbindet. Gemäß dieser Ausführungsform sind die Kontakte der manuell betätigbaren Tastschalter der Handbedienung 7 als Leistungsschalter ausgebildet und schalten bei Tastendruck den hohen Motorstrom des Elektromotors des Linearantriebs 2.

In einer weiterführenden, jedoch nicht näher dargestellten Ausführungsform, ist die Energieversorgungseinrichtung 5 in dem Gehäuse des Linearantriebs 2 eingesetzt oder daran angesetzt, wobei der Linearantrieb 2 in nicht näher dargestellter Weise nach Art eines Doppelantriebes aufgebaut sein kann, welcher wenigstens einen Motor, jedoch vorzugsweise zwei Motoren in einem gemeinsamen Gehäuse aufnimmt.

Der Netzstecker 8 leitet über das Netzkabel 110 die eingangsseitige Netzspannung zu der als Schaltnetzteil ausgebildeten Energieversorgungseinrichtung 5, welche sekundärseitig eine Kleinspannung in Form einer Gleichspannung als Betriebsspannung U1 abgibt und diese zu einer Motorsteuerung 6 weiterleitet. Die Betriebsspannung U1 liegt z.B. in der Höhe von etwa 29 V und dient in einem Betriebszustand der Energieversorgungseinrichtung 5 zum Betrieb der Motorsteuerung 6 und des Linearantriebs 2.

Außerdem gibt die Energieversorgungseinrichtung 5 sekundärseitig eine weitere Spannung ab, welche als Ruhespannung U2 bezeichnet wird, z.B. ungefähr 5 V Gleichspannung beträgt und in einem vom Betriebszustand unterschiedlichen Ruhezustand der Energieversorgungseinrichtung 5 an die Motorsteuerung 6 anstelle der Betriebsspannung U1 zugeleitet wird. Die Funktion der Ruhespannung U2 ist es, im Ruhezustand eine Betätigung der Handbedienung 7 zu erfassen und dies der Energieversorgungseinrichtung 5 zu signalisieren. Daraufhin stellt die Energieversorgungseinrichtung 5 wieder die Betriebsspannung U1 in voller Höhe und Leistungsfähigkeit der Motorsteuerung 6 und dem Linearantrieb 2 für den Betrieb im Betriebszustand zu Verfügung. In einer anderen Ausführungsform weist die Ruhespannung U2 eine weitere Funktion auf, indem sie als Spannungsversorgung von nicht näher dargestellten Funktionselementen dient oder die Spannungsquelle von nicht näher dargestellten Funktionselementen bildet.

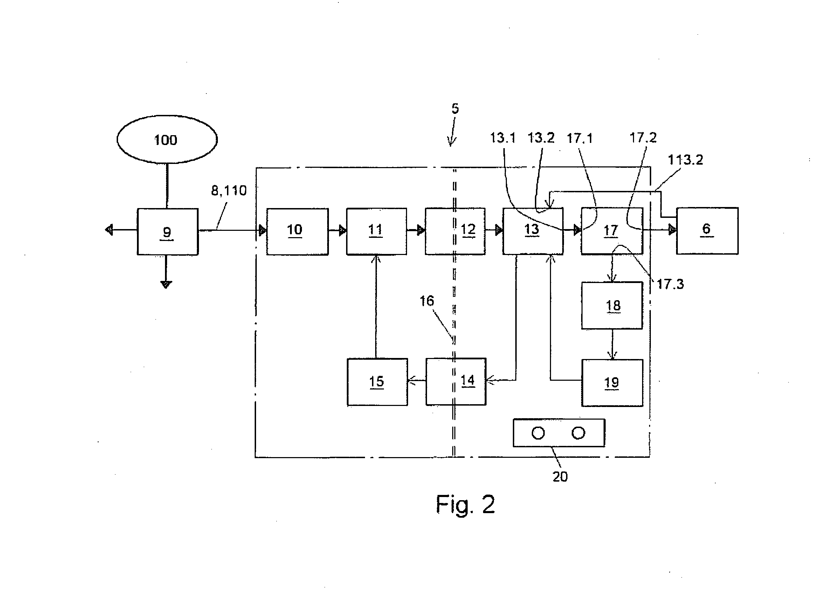

Figur 2 zeigt ein schematisches Blockschaltbild eines Ausführungsbeispiels der Energieversorgungseinrichtung 5 nach Figur 1.

Leistungsleitungen bzw. -pfade sind durch dicke Linien und Steuerleitungen bzw. - pfade sind durch dünne Linien angedeutet.

Die Energieversorgungseinrichtung 5 weist einen Eingangskreis 10, einen Zwischenkreis 11, eine Übertragereinheit 12, eine Sekundäreinheit 13, eine Koppeleinrichtung 14, eine Steuereinrichtung 15 sowie eine Lasterkennungseinheit 17 mit einem Steuerblock 19 auf. Zwischen Lasterkennungseinheit 17 und Steuerblock 19 kann noch eine Signalbearbeitung 18 geschaltet sein.

Der Eingangskreis 10 ist eingangsseitig (durch Pfeile angedeutet) mit einem Energieversorgungsnetz 100 über Netzstecker 8 und Netzkabel 110 koppelbar. Zum Anschluss an das Energieversorgungsnetz 100 kann z.B. einer Hausinstallation ein Netzfreischalter 9 als eine so genannte übergeordnete Netzfreischaltung installiert sein. Die freien Pfeile deuten Anschlussmöglichkeiten für weitere Verbraucher an.

Der Netzfreischalter 9 schaltet ein Hausinstallationsnetz frei, sobald kein elektrischer Verbraucher mehr eingeschaltet ist. Dann legt der Netzfreischalter 9 - je nach Ausführung - eine Prüfspannung auf das Hausinstallationsnetz, um zu erfassen, wenn ein Verbraucher eingeschaltet wird. Ist dies der Fall, verbindet der Netzfreischalter 9 das Hausinstallationsnetz wieder mit dem Energieversorgungsnetz 100.

In dem Eingangskreis 10 der Energieversorgungseinrichtung 5 sind übliche Netzentstörglieder, wie Kondensatoren und Drosseln, sowie auch Sicherungen enthalten, die hier nicht näher gezeigt sind. Der Eingangskreis 10 ist mit dem Zwischenkreis 11 verbunden, welcher eine Gleichrichtung und einen Schaltbaustein, z.B. einen Schalttransistor, aufweist. Der Zwischenkreis 11 ist mit dem Schaltbaustein an die Übertragereinheit 12 gekoppelt. Die Übertragereinheit 12 weist einen Transformator mit galvanischer Trennung 16 auf, welche sich durch die Energieversorgungseinrichtung 5 hindurch erstreckt. An der Sekundärseite der Übertragereinheit 12 ist die Sekundäreinheit 13 angeschlossen, welche die Betriebsspannung U1 zur Versorgung des Linearantriebs 2 über das Versorgungskabel 17.2 an die Motorsteuerung 6 (Figur 1) bereitstellt. Eine Rückwirkung der Sekundäreinheit 13 ist über die Koppeleinheit 14, z.B. ein Optokoppler 16 mit galvanischer Trennung 16 an die Steuereinrichtung 15 angeordnet. Die Steuereinrichtung 15 steuert den Schaltbaustein des Zwischenkreises 11 zur Regelung der Betriebsspannung U1 und in einem bestimmten Fall, wie unten noch erläutert wird, auch der Ruhespannung U2 der Sekundäreinheit 13. Dazu weist die Sekundäreinheit 13 eine (nicht gezeigte) Referenzspannungseinheit auf.

Weiterhin ist die Steuerleitung 113.2 (siehe Figur 1) gezeigt, welche hier zwischen der Motorsteuerung 6 und der Sekundäreinheit 13 angeschlossen ist.

Außerdem weist die Energieversorgungseinrichtung 5 in diesem Ausführungsbeispiel eine Anzeigeeinheit 20 auf, welche z.B. anzeigt, ob die Betriebsspannung U1 oder die Ruhespannung U2 an der Motorsteuerung 6 anliegt. Dies wird unten noch weiter erläutert.

Die Lasterkennungseinheit 17 dient zur Erkennung, ob der elektrische Motor des Linearantriebs 2 (oder auch eine andere zusätzliche Last, wie z.B. eine Leselampe) durch die Handbedienung 7 betätigt eingeschaltet ist und Strom verbraucht oder ausgeschaltet ist. Weiterhin kann die Lasterkennungseinheit 17 erfassen, ob die Handbedienung 7 noch betätigt ist, wenn der Linearantrieb 2 z.B. durch einen Endschalter ausgeschaltet ist. Die Lasterkennungseinheit 17 kann auch erkennen, wenn die Handbedienung 7 im Ruhezustand der Energieversorgungseinrichtung 5 betätigt wird.

Eine weitere Funktion der Lasterkennungseinheit 17 besteht darin, die Energieversorgungseinrichtung 5 von deren Betriebszustand in deren Ruhezustand zu schalten, wenn kein Verbraucher mehr eingeschaltet ist, und die Energieversorgungseinrichtung 5 von deren Ruhezustand in deren Betriebszustand zu schalten, wenn ein Verbraucher eingeschaltet werden soll.

Dazu gibt die Lasterkennungseinheit 17 anhand ihrer Erfassungswerte Signale ab, die entsprechend in der Signalbearbeitung 18 ver- und/oder so bearbeitet werden, dass sie zur Weiterverarbeitung in dem Steuerblock 19 verwendet werden können. Dies kann z.B. darin bestehen, dass die von der Lasterkennungseinheit 17 erzeugten Signale zeitlich verlängert oder verkürzt werden oder erst nach einer bestimmten Verzögerungszeit weitergeleitet werden.

Der Steuerblock 19 steht mit der Sekundäreinheit 13 in Verbindung und steuert diese anhand der Signale der Lasterkennungseinheit 17 derart, dass die Energieversorgungseinrichtung 5 im Betriebszustand die Betriebsspannung U1 und im Ruhezustand die Ruhespannung U2 liefert. Dies wird unten noch näher beschrieben.

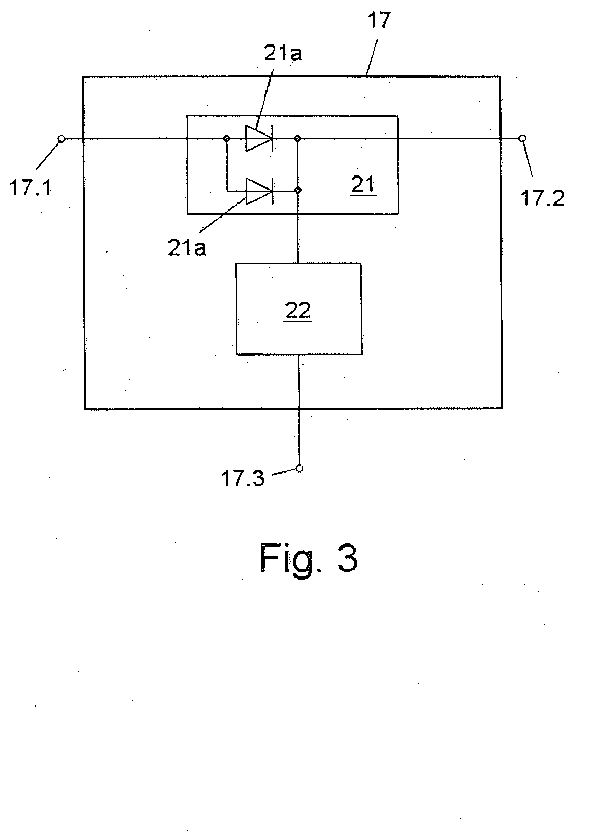

Figur 3 stellt ein schematisches Blockschaltbild eines ersten Ausführungsbeispiels der Lasterkennungseinheit 17 der Energieversorgungseinrichtung nach Figur 2 dar.

Die Lasterkennungseinheit 17 umfasst in diesem Ausführungsbeispiel einen Sensor 21 mit einem Eingangsanschluss 17.1 und einem Ausgangsanschluss 17.2 sowie einen Vergleicher 22 mit einem Ausgangsanschluss 17.3 (siehe auch Figur 2). Der Vergleicher 22 ist mit einem Eingang an den Sensor angeschlossen.

Der Sensor 21 ist in Reihe mit der Motorsteuerung 6 und somit mit dem(den) Verbraucher(n) geschaltet (siehe Figur 2). Der Sensor 21 weist mindestens eine Sensordiode 21 a auf. Hier sind aufgrund der Strombelastbarkeit zwei Sensordioden 21 a parallel geschaltet. Bei einem Stromfluss von 17.1 nach 17.2 aufgrund der Motorsteuerung 6 fällt an dem Sensor 21 eine Spannung ab, die von dem Vergleicher, der mit einem Eingang an den Kathoden der Sensordioden 21a angeschlossen ist, mit einem Vergleichswert verglichen wird. Der Vergleichswert kann auf unterschiedliche Art erzeugt werden und vorbestimmbar sein.

Anhand des Vergleichs gibt der Vergleicher 22 ein Signal oder kein Signal an seinem Ausgangsanschluss 17.3 ab.

Der Vergleicher 22 kann an seinem Eingang mit einem Verstärker versehen sein.

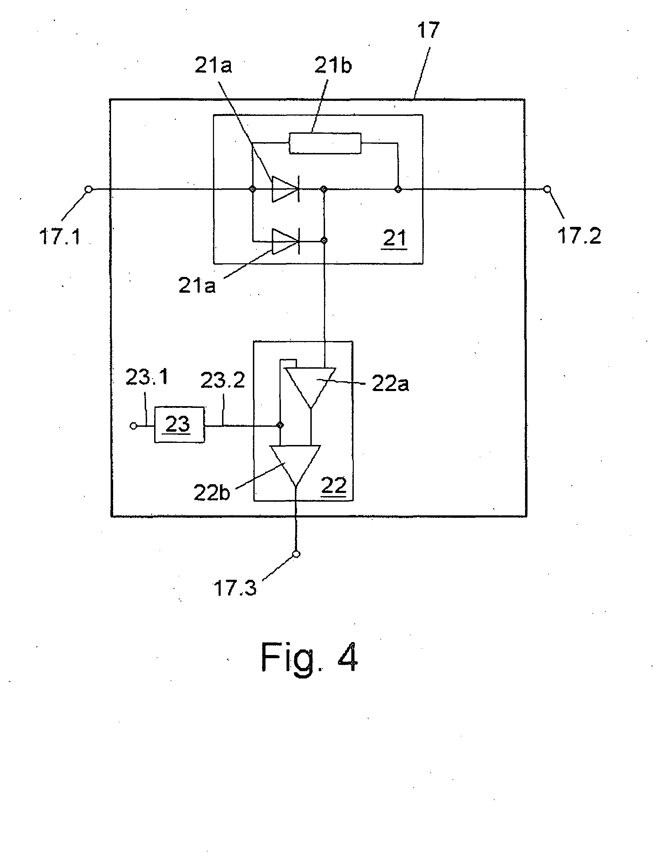

Figur 4 zeigt ein schematisches Blockschaltbild eines zweiten Ausführungsbeispiels der Lasterkennungseinheit 17 der Energieversorgungseinrichtung 5 nach Figur 2.

Dies zweite Ausführungsbeispiel unterscheidet sich von dem ersten nach Figur 3 im Aufbau des Sensors 21 und in der Art des Vergleichers 22.

Den Sensordioden 21a ist ein Sensorwiderstand 21 b parallel geschaltet. Weiterhin ist der Vergleicher mit einem ersten Operationsverstärker 22a und einem nachgeschalteten zweiten Operationsverstärker 22b aufgebaut. Der erste Operationsverstärker dient zur Verstärkung und der zweite Operationsverstärker 22b als Vergleicher der verstärkten Spannung des Sensors 21. Zum Vergleich ist der zweite Operationsverstärker 22b an einem seiner Eingänge mit dem Ausgangsanschluss 23.2 einer Referenzeinheit 23 verbunden. Die Referenzeinheit 23 weist außerdem einen Eingang 23.1 auf, der z.B. mit dem Anschluss 17.1 verbunden ist. Mit anderen Worten wird die Referenzeinheit 23 von der Betriebsspannung U1 oder der Ruhespannung U2 versorgt. Die Referenzeinheit 23 ist z.B. eine Konstantstromquelle.

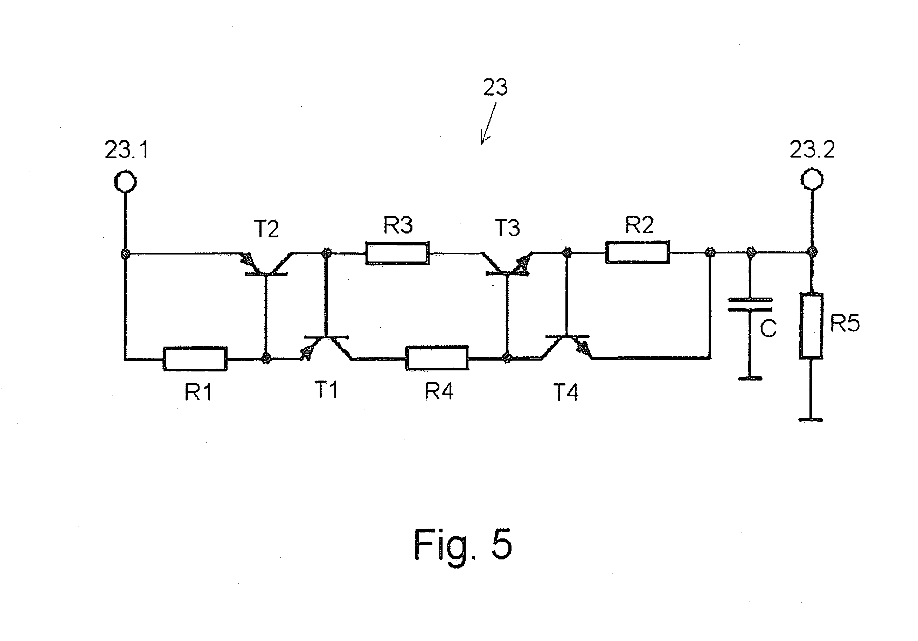

Ein Beispiel einer solchen Konstantstromquelle zeigt Figur 5 als einen schematischen Schaltplan der Referenzeinheit 23 der Lasterkennungseinheit 17 nach Figur 4.

Die Referenzeinheit 23 ist als Konstantstromquelle mit dem Eingangsanschluss 23.1 und dem Ausgangsanschluss 23.2 ausgebildet. An dem Eingangsanschluss 23.1 verzweigt die Schaltung in zwei parallele Strompfade.

Der erste Strompfad ist eine Reihenschaltung einer Emitter-Kollektor-Strecke eines pnp-Transistors T2, eines Widerstands R3, einer Kollektor-Emitter-Strecke eines npn-Transistors T3 und eines Widerstands R2.

Der zweite Strompfad ist ebenfalls eine Reihenschaltung eines Widerstands R1, einer Emitter-Kollektor-Strecke eines pnp-Transistors T1, eines Widerstands R4 und einer Kollektor-Emitter-Strecke eines npn-Transistors T4.

Die Transistoren T2 und T1 sind so verbunden, dass der Kollektor des Transistors T2 mit der Basis des Transistors T1 verbunden ist, wobei die Basis des Transistors T2 an den Emitter des Transistors T1 angeschlossen ist.

Eine Verbindung der Transistoren T3 und T4 ist in ähnlicher Weise ausgebildet, indem die Basis des Transistors T3 an den Kollektor des Transistors T4 angeschlossen ist, und der Emitter des Transistors T3 mit der Basis des Transistors T4 verbunden ist.

An dem Ausgangsanschluss 23.2 ist ein Kondensator C und ein dazu paralleler Widerstand R5 mit Masse verbunden.

Mit anderen Worten, der linke Teil der Schaltung ist anstelle eines so genannten Stromspiegels einer Ube-Konstantstromquelle "gespiegelt", d.h. npn-Transistoren gegen pnp-Transistoren getauscht, rechts daneben aufgebaut. Somit begrenzen die beiden Schaltungsteile gegenseitig den durch sie fließenden Strom in den beiden "mittleren" Pfaden. Weil beide Strompfade einen begrenzten Strom führen und kein Teil der Schaltung direkt mit Masse verbunden ist, wird der gesamte Strom "genutzt".

Der gesamte, durch alle diese Schaltungselemente fließende Strom ist konstant, wobei eine möglichst geringe Verlustleistung erreicht wird. Kein Teil dieses Stroms fließt "ungenutzt" nach Masse ab.

Auch sehr kleine Ströme, z.B. im Mikroamperebereich, sind in erfinderischer Weise durch diese Schaltung möglich. Dies ist besonders für den Ruhezustand bei der Ruhespannung U2 von Bedeutung.

Die Schaltung nach Figur 5 zeichnet sich auch dadurch aus, dass sie diskret mit Standardbauteilen aufgebaut ist.

Der Steuerblock 19 erhält nun von der Lasterkennungseinheit 17 ein Signal, das dem Ruhezustand der Energieversorgungseinrichtung 5 oder dem Betriebszustand der Energieversorgungseinrichtung 5 zugeordnet ist.

Der Steuerblock 19 kann in einer nicht dargestellten, aber leicht vorstellbaren Weise so ausgebildet sein, dass er für die Referenzspannungserzeugung der nicht gezeigten Referenzspannungseinheit der Sekundäreinheit eine Umschaltung der Referenzspannung vornimmt. Dazu kann z.B. mittels eines Transistors und eines Widerstands ein vorhandener spannungsbestimmender Widerstand überbrückt oder/und verändert werden. Dabei wird von der Referenzspannungseinheit ein Steuersignal erzeugt, welches über die Koppeleinheit 14 der Steuereinrichtung 15 zugeleitet wird. Die Steuereinrichtung 15 stellt anhand dieses Signals die jeweilige Spannung, nämlich die Betriebsspannung U1 und die Ruhespannung U2, primärseitig ein und regelt diese in bekannter Weise. Auf diese Weise kann die Energieversorgungseinrichtung 5 für den Betriebszustand die Betriebsspannung U1 und für den Ruhezustand die Ruhespannung U2 liefern. Somit ist die Energieversorgungseinrichtung 5 zwischen der Betriebsspannung U1 und der Ruhespannung U2 umschaltbar ausgebildet.

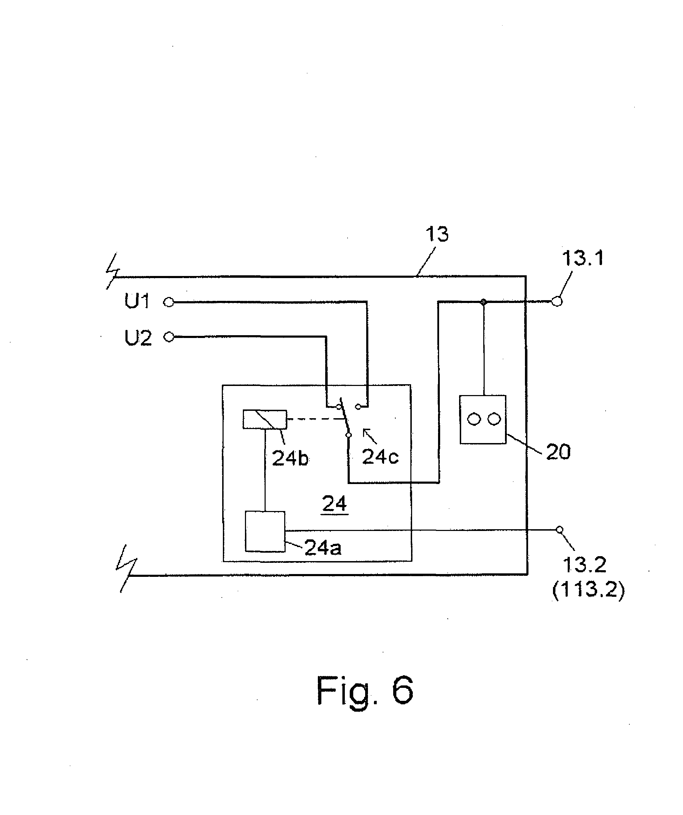

Ein weiteres Beispiel zur Umschaltung der Spannungen U1 und U2 zeigt Figur 6 in einem schematischen Blockschaltbild eines Ausführungsbeispiels einer Umschalteinheit 24 der Energieversorgungseinrichtung 5 nach Figur 2.

Die Umschalteinheit 24 weist eine Ansteuerung 24a, z.B. einen Schalttransistor, auf, welche mit einem Umschaltelement 24b, z.B. ein Relais mit einem Umschaltkontakt 24c, verbunden ist. Die Ansteuerung 24a ist mit einem Eingangsanschluss 13.2 verbunden.

Der Umschaltkontakt 24c ist mit seinem Ausgang mit dem Ausgangsanschluss 13.1 der Sekundäreinheit 13 verbunden. An einem der beiden Eingänge des Umschaltkontakts 24c liegt die Betriebsspannung U1, und an dem anderen der beiden Eingänge liegt die Ruhespannung U2.

In Figur 6 ist der Ruhezustand gezeigt. Hierbei ist der Umschaltkontakt 24c so geschaltet, z.B. stromlos, dass die Ruhespannung U2 über den Umschaltkontakt 24c mit dem Ausgangsanschluss 13.1 verbunden ist.

An dem Ausgangsanschluss 13.1 ist hier die Anzeigeeinheit 20 angeschlossen. Mittels einer nicht gezeigten Spannungsauswahleinrichtung wird der jeweilige Zustand mit einem zugeordneten Anzeigeelement angezeigt.

In diesem Ausführungsbeispiel erzeugt die Energieversorgungseinrichtung 5 sowohl die Betriebsspannung U1 als auch die Ruhespannung U2. Je nach Signal an dem Eingangsanschluss 13.2 wird die Betriebsspannung U1 oder die Ruhespannung U2 an den Ausgangsanschluss 13.1 gelegt.

Der Eingangsanschluss 13.2 ist in der oben kurz angedeuteten Dreidrahtausführung mit der Steuerleitung 113.2 der Motorsteuerung 6 verbunden. Er kann aber auch mit dem Steuerblock 19 von der Lasterkennungseinheit 17 angesteuert werden. Dies gilt dann für eine so genannte Zweidrahtausführung.

Bei der Dreidrahtausführung ist die zusätzliche Steuerleitung 113.2 über die Motorsteuerung 6 mit der Handbedienung 7 verbunden und/oder gekoppelt. Die anderen beiden Leitungen bzw. Drähte der Dreidrahtausführung sind eine Plusleitung und eine Minusleitung des Versorgungskabels 111. Bei der Zweidrahtausführung sind nur Plus- und Minusleitung vorhanden.

Die Ruhespannung U2 kann auch mittels einer Anzapfung des Übertragers der Übertragereinheit erzeugt werden.

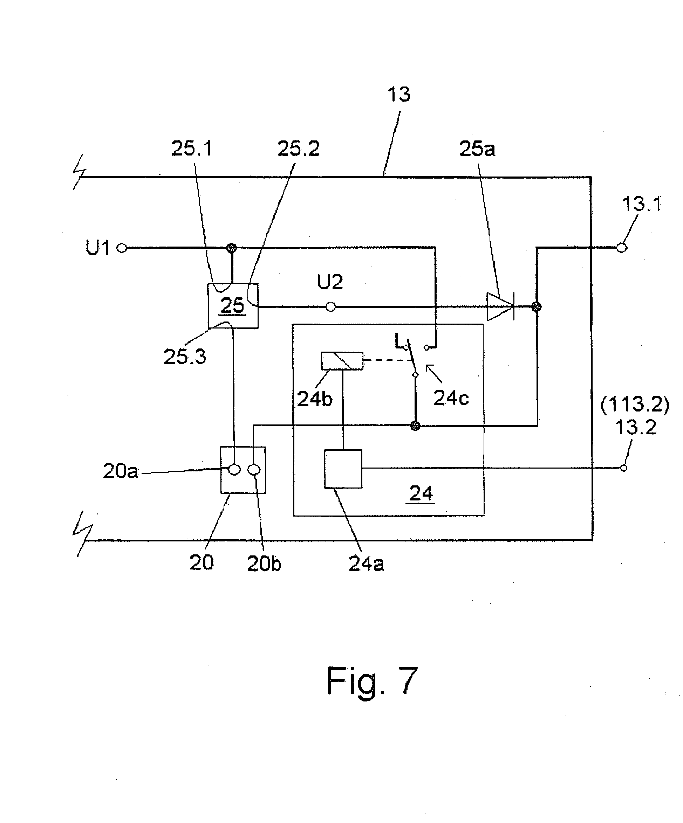

Figur 7 zeigt ein schematisches Blockschaltbild eines Ausführungsbeispiels einer Erzeugung einer Ruhespannung U2 der Energieversorgungseinrichtung 5 nach Figur 2.

Die Umschalteinheit 24 ist wie in Figur 6 aufgebaut. Im Unterschied dazu wird der Umschaltkontakt 24c hier nur als Einschaltkontakt bzw. Schließer verwendet und ist mit der Betriebsspannung U1 verbunden. Der Ausgang des Umschaltkontakts 24c liegt wie in Figur 6 auf dem Ausgangsanschluss 13.1.

Die Energieversorgungseinrichtung 5 erzeugt ständig die Betriebsspannung, sowohl im Betriebszustand als auch im Ruhezustand.

Die Ruhespannung U2 wird durch einen Spannungsregler 25 erzeugt, welcher mit einem Eingangsanschluss mit der Betriebsspannung U1 verbunden ist. Sein Ausgangsanschluss ist über eine Einspeisediode 25a mit dem Ausgangsanschluss 13.1 verbunden, wobei die Kathode der Einspeisediode 25 auf dem Ausgangsanschluss liegt, da hier die Plusleitungen gezeigt sind. Bei anderer Polung sind auch die Dioden jeweils anzupassen. Auf diese Weise ist der Ausgangsanschluss 13.1 immer mit der Ruhespannung U2 beaufschlagt.

Wird nun der Betriebszustand durch ein Signal an dem Eingangsanschluss 13.2 durch Umschalten des Umschaltkontakts 24c der Umschalteinheit 24 eingestellt, so wird die Betriebsspannung U1 zusätzlich zu der Ruhespannung U2 auf den Ausgangsanschluss 13.1 gelegt. Eine Rückwirkung der höheren Betriebsspannung U1 auf den Spannungsregler 25 ist durch die Einspeisediode 25a ausgeschlossen.

Die Anzeigeeinheit 20 ist hier mit einer ersten Spannungsanzeige 20a, z.B. einer LED, im niedrigen Querstrom des Spannungsreglers eingesetzt, wodurch eine zusätzliche Ansteuerung entfällt. Diese erste Spannungsanzeige 20a zeigt die Ruhespannung U2 an. Eine zweite Spannungsanzeige 20b, z.B. auch eine LED, ist mit dem Ausgangsanschluss 13.1 über eine nicht gezeigte Zenerdiode verbunden und leuchtet erst, wenn die Spannung am Ausgangsanschluss 13.1 die Spannung U1 annimmt und höher als die Zenerspannung dieser Zenerdiode ist. Natürlich kann auch eine andere Spannungsauswahleinrichtung verwendet werden. Die beiden Spannungsanzeigen 20a und 20b können als eine Doppel-LED realisiert sein. Da die erste LED 20a ständig leuchtet und die zweite LED 20b dazu eingeschaltet wird, ist es sinnvoll, wenn diese LED unterschiedliche Farben zeigen. Eine Zweifarben-LED ist dazu vorgesehen.

Wenn die Ruhespannung U2 im Ruhezustand in der Größe von etwa 5 V an der Motorsteuerung 6 anliegt, kann der elektrische Motor des Linearantriebs 2 damit nicht verfahren werden. Aber bei seinem Einschalten oder beim Einschalten der Steuerrelais fließt ein Strom, der nicht unbedingt zum Anziehen dieser Relais führt, aber einen Spannungsabfall am Sensor 21 der Lasterkennungseinheit 17 hervorruft und wie beschrieben die Energieversorgungseinrichtung 5 aus dem Ruhezustand in den Betriebszustand zu Lieferung der Versorgungsspannung U1 zum Betrieb des Linearantriebs 2 auslöst.

Im Hinblick auf Figur 2, in welcher der Netzfreischalter 9 gezeigt ist, kann dieser - je nach Typ und Ausbildung - im Ruhezustand der Energieversorgungseinrichtung 5 dies erkennen und eine Freischaltung der Hausinstallation vornehmen. In diesem Fall kann dann auf die Hausinstallation von dem Netzfreischalter eingespeiste Prüfspannung (z.B. Gleichspannung in einer bestimmten Höhe) ausreichen, um im Ruhezustand der Energieversorgungseinrichtung 5 diese in einem Minimalruhebetrieb zu betreiben, derart, dass die Ruhespannung U2 zwar geringer als 5 V ist, aber dennoch ausreicht, um in der Lasterkennungseinheit 17 einen erfassbaren Spannungsabfall bei Betätigungswunsch zu generieren.

Dann wird die Energieversorgungseinrichtung 5 auf obigem erläuterten Wege in den Betriebszustand umgeschaltet, was dazu führt, dass dieses von der Prüfspannung des Netzfreischalters 9 erkannt wird und die Hausinstallation wieder an das Energieversorgungsnetz 100 geschaltet wird.

Dies trifft für eine Vielzahl von unterschiedlichen Netzfreischaltern 9 zu.

In einer anderen Ausführungsform der Energieversorgungseinrichtung 5 ist eine schaltbare und/oder veränderliche Anfangslast vorgesehen, welche im Zwischenkreis 11 oder im Eingangskreis 10 an die Anschlüsse des Netzkabels 110 vorübergehend anschließbar ist, um eine eindeutige Erkennung des Betriebszustands der Energieversorgungseinrichtung 5 durch die Prüfspannung des Netzfreischalters 9 zu gewährleisten. Diese Anfangslast kann z.B. ein Widerstand oder ein als veränderlicher Widerstand geschalteter MOSFET oder ein Kondensator sein, der bei erfolgter Erkennung durch den Netzfreischalter 9 wieder abgetrennt wird. Dieses Aufschalten der Anfangslast kann durch die Lasterkennungseinheit 17 ausgelöst werden.

Die oben beschriebenen Ausführungsbeispiele schränken die Erfindung nicht ein. Sie ist im Rahmen der beigefügten Ansprüche modifizierbar.

So kann es denkbar sein, dass die Motorsteuerung 6 oder/und die Handbedienung 7 mit einer zusätzlichen Hilfsenergiequelle versehen ist/sind. Diese Hilfsenergiequelle kann z.B. eine Batterie/wiederaufladbare Batterie/ein Kondensator sein und auch for eine Notabsenkung dienen.

Das Energieversorgungsnetz 100 kann auch ein Gleichstromnetz oder eine Batterie/ein Akkumulator sein.

Es ist denkbar, dass das Schaltelement 24b der Umschalteinheit 24 einen oder mehrere Halbleiterschalter aufweisen kann.

### Bezugszeichenliste

- 1: Elektromotorischer Möbelantrieb
- 2: Linearantrieb
- 3: Hubrohr
- 4: Gabelkopf
- 5: Energieversorgungseinrichtung
- 6: Motorsteuerung
- 7: Handbedlenung
- 8: Netzstecker
- 9: Netzfreischalter
- 10: Eingangskreis
- 11: Zwischenkreis
- 12: Übertragereinheit
- 13: Sekundäreinheit
- 13.1-13.2: Anschlüsse
- 14: Koppeleinheit
- 15: Steuereinrichtung
- 16: Galvanische Trennung
- 17: Lasterkennungseinheit
- 17.1-17.3: Anschlüsse
- 18: Signalbearbeitung
- 19: Steuerblock
- 20: Anzeigeinheit
- 20a: Erste Spannungsanzeige
- 20b: Zweite Spannungsanzeige
- 21: Sensor
- 21a: Sensordiode
- 21b: Sensorwiderstand
- 22: Vergleicher
- 22a-22b: Operationsverstärker
- 23: Referenzeinheit
- 23.1-23.2: Anschlüsse
- 24: Umschalteinheit
- 24a: Ansteuerung
- 24b: Umschaltelement
- 24c: Umschaltkontakt
- 25: Spannungsregler
- 25a: Eirispeisediode
- 25.1-25.3: Anschlüsse
- 100: Energieversorgungsnetz
- 110: Netzkabel
- 111: Versorgungskabel
- 112: Motorkabel
- 113: Bedienungskabel
- 113.2: Steuerleitung
- C: Kondensator
- R1-R5: Widerstand
- T1-T4: Transistor
- U1: Betriebsspannung
- U2: Ruhespannung

## Patentansprüche

1. Elektromotorischer Möbelantrieb (1) mit einer Energieversorgungseinrichtung (5) und mit einer Handbedienung (7) zum Verstellen von beweglichen Möbelbauteilen relativ zueinander,
wobei der elektromotorische Möbelantrieb (1) wenigstens einen drehrichtungsumkehrbaren Elektromotor aufweist, wobei jedem Elektromotor ein Drehzahlreduziergetriebe nachgeschaltet ist und wobei jedem Drehzahlreduziergetriebe ein weiteres Getriebe nachgeschaltet ist,
und wobei die Energieversorgungseinrichtung (5) einen Netzanschluss über ein Netzkabel (110) aufweist, weicher mit einem Energieversorgungsnetz (100) verbindbar ausgebildet ist, wobei die Energieversorgungseinrichtung (5) die netzseitige Eingangsspannung in mindestens eine ausgangsseitige Kleinspannung transformiert, und einen mit hoher Frequenz geschalteten Trenntransformator oder eine Übertragungseinheit zur galvanischen Trennung (16) zwischen der netzgebundenen Eingangsseite und der kleinspannungsgebenden Ausgangsseite zum Betrieb des elektromotorischen Möbelantriebs (1) aufweist, wobei die Energieversorgungseinrichtung (5) nach Art eines Schaltnetzteils ausgebildet ist und einen Zwischenkreis (11), eine Steuereinrichtung (15) zur Steuerung des Schaltnetzteils und eine Sekundäreinheit (13) aufweist, wobei die Energieversorgungseinrichtung (5) einen Betriebszustand im regulären Betrieb des elektromotorischen Möbelantriebs (1) und einen Ruhezustand aufweist, wenn der elektromotorische Möbelantrieb (1) unbetätigt ist, wobei die Energieversorgungseinrichtung (5) in ihrem Betriebszustand eine ausgangsseitige Betriebsspannung (U1) und in ihrem Ruhezustand anstelle der Betriebsspannung (U1) eine ausgangsseitige Ruhespannung (U2) an ihrem Ausgang bereitstellt,
**dadurch gekennzeichnet,**
**dass** die Energieversorgungseinrichtung (5) mit einer schaltbaren und/oder veränderlichen Anfangslast versehen ist, welche so ausgebildet und so an die Anschlüsse des Netzkabels (110) der Energieversorgungseinrichtung (5) vorübergehend anschließbar ist, dass eine eindeutige Erkennung des Betriebszustands der Energieversorgungseinrichtung (5) für einen Netzfreischalter (9), der eine übergeordnete Netzfreischaltung bildet, gebildet ist, wobei der Netzfreischalter (9) zwischen dem Energieversorgungsnetz (100) und dem Netzkabel (110) der Energieversorgungseinrichtung (5) eingesetzt ist und eine Trennung oder eine Verbindung der Energieversorgungseinrichtung (5) von oder mit dem Energieversorgungsnetz (100) bewirkt.

2. Elektromotorischer Möbelantrieb (1) nach Anspruch 1, **dadurch gekennzeichnet, dass** die Energieversorgungseinrichtung (5) weiterhin eine Lasterkennungseinheit (17) mit einem Sensor (21), und einen Steuerblock (19) aufweist, wobei der Steuerblock (19) mit einer Referenzspannungsspannungseinheit der Sekundäreinheit (13) verbunden ist und zur Umschaltung der ausgangsseitigen Betriebsspannung (U1) in die ausgangsseitige Ruhespannung (U2) ausgebildet ist.

3. Elektromotorischer Möbelantrieb (1) nach Anspruch 1, **dadurch gekennzeichnet, dass** die Energieversorgungseinrichtung (5) weiterhin eine Lasterkennungseinheit (17) mit einem Sensor (21), und einen Steuerblock (19) aufweist, wobei der Steuerblock (19) mit einer Umschalteinheit (24) der Sekundäreinheit (13) zur Umschaltung der ausgangsseitigen Betriebsspannung (U1) in die ausgangsseitige Ruhespannung (U2) verbunden ist.

4. Elektromotorischer Möbelantrieb (1) nach Anspruch 3, **dadurch gekennzeichnet, dass** die Umschalteinheit (24) ein Schaltelement (24b) aufweist, welches im stromlosen Zustand ausgangsseitig die Ruhespannung (U2) auf den Ausgang der Energieversorgungseinrichtung (5) schaltet.

5. Elektromotorischer Möbelantrieb (1) nach einem oder mehreren der vorhergehenden Ansprüche, **dadurch gekennzeichnet, dass** die Lasterkennungseinheit (17) einen Vergleicher (22) aufweist.

6. Elektromotorischer Möbelantrieb (1) nach Anspruch 5, **dadurch gekennzeichnet, dass** der Vergleicher (22) mit einer Referenzeinheit (23) verbunden ist.

7. Elektromotorischer Möbelantrieb (1) nach Anspruch 6, **dadurch gekennzeichnet, dass** die Referenzeinheit (23) eine Konstantstromquelle umfasst.

8. Elektromotorischer Möbelantrieb (1) nach Anspruch 7, **dadurch gekennzeichnet, dass** die Konstantstromquelle der Referenzeinheit (23) zwei parallele Strompfade mit einem Paar von pnp-Transistoren (T1, T2) und einem Paar npn-Transistoren (T3, T4) aufweist.

9. Elektromotorischer Möbelantrieb (1) nach einem oder mehreren der Ansprüche 3 bis 8, **dadurch gekennzeichnet, dass** ein Spannungsregler (25) zur Erzeugung der Ruhespannung (U2) vorgesehen ist und mit der Betriebsspannung (U1) als Eingangsspannung verbunden ist.

10. Elektromotorischer Möbelantrieb (1) nach Anspruch 9, **dadurch gekennzeichnet, dass** die Ruhespannung (U2) ständig mit dem Ausgang der Energieversorgungseinrichtung (5) verbunden ist, wobei im Betriebszustand die Betriebsspannung (U1) hinzugeschaltet wird.

11. Elektromotorischer Möbelantrieb (1) nach einem oder mehreren der vorgenannten Ansprüche, **dadurch gekennzeichnet, dass** die Energieversorgungseinrichtung (5) eine Anzeigeeinheit (20) zur Anzeige der Betriebsspannung (U1) und der Ruhespannung (U2) aufweist.

12. Elektromotorischer Möbelantrieb (1) nach einem oder mehreren der vorgenannten Ansprüche, **dadurch gekennzeichnet, dass** die Motorsteuerung (6) oder/und die Handbedienung (7) mit einer Hilfsenergiequelle versehen. ist/sind.

13. Elektromotorischer Möbelantrieb (1) nach Anspruch 12, **dadurch gekennzeichnet, dass** die Hilfsenergiequelle eine Batterie, ein Akkumulator oder/und ein Kondensator ist.

## Claims

1. An electric-motor furniture drive (1) having a power supply device (5) and having a manual control (7) for adjusting movable furniture components relative to one another,
wherein the electric-motor furniture drive (1) has at least one electric motor, which is reversible in the rotational direction, wherein a speed reduction gear is connected downstream from each electric motor and wherein a further gear is connected downstream from each speed reduction gear,
and wherein the power supply device (5) has a network terminal via a network cable (110), which is implemented as connectable to a power supply network (100), wherein the power supply device (5) transforms the network-side input voltage into at least one output-side low voltage, and has a disconnection transformer switched at high frequency or a transformer unit for the electrical disconnection (16) between the network-connected input side and the low-voltage-providing output side for operating the electric-motor furniture drive (1), wherein the power supply device (5) is implemented like a switched power supply and has an intermediate circuit (11), a control unit (15) for controlling the switched power supply, and a secondary unit (13), wherein the power supply device (5) has an operating state in regular operation of the electric-motor furniture drive (1) and an idle state when the electric-motor furniture drive (1) is not actuated, wherein the power supply device (5) provides at its output an output-side operating voltage (U1) in its operating state and provides at its output an output-side idle voltage (U2), instead of the operating voltage (U1), in its idle state,
**characterized in that**
the power supply device (5) is provided with a switchable and/or variable initial load, which is implemented and temporarily connectable to the terminals of the network cable (110) of the power supply device (5) such that an unambiguous recognition of the operating state of the power supply device (5) is formed for a network circuit breaker (9), wherein the network circuit breaker (9) is installed between the power supply network (100) and the network cable (110) of the power supply device (5) and effectuates a disconnection or a connection of the power supply device (5) from or to the power supply network (100).

2. The electric-motor furniture drive (1) according to Claim 1, **characterized in that** the power supply device (5) also has a load recognition unit (17) having a sensor (21), and a control block (19), wherein the control block (19) is connected to a reference voltage unit of the secondary unit (13) and is implemented to switch over the output-side operating voltage (U1) into the output-side idle voltage (U2).

3. The electric-motor furniture drive (1) according to Claim 1, **characterized in that** the power supply device (5) also has a load recognition unit (17) having a sensor (21), and a control block (19), wherein the control block (19) is connected to a switchover unit (24) of the secondary unit (13) for switching over the output-side operating voltage (U1) into the output-side idle voltage (U2).

4. The electric-motor furniture drive (1) according to Claim 3, **characterized in that** the switchover unit (24) has a switching element (24b), which in the deenergized state switches the idle voltage (U2) at the output side to the output of the power supply device (5).

5. The electric-motor furniture drive (1) according to one or more of the preceding claims, **characterized in that** the load recognition unit (17) has a comparator (22).

6. The electric-motor furniture drive (1) according to Claim 5, **characterized in that** the comparator (22) is connected to a reference unit (23).

7. The electric-motor furniture drive (1) according to Claim 6, **characterized in that** the reference unit (23) comprises a constant current source.

8. The electric-motor furniture drive (1) according to Claim 7, **characterized in that** the constant current source of the reference unit (23) has two parallel current paths having one pair of pnp-transistors (T1, T2) and one pair of npn-transistors (T3, T4).

9. The electric-motor furniture drive (1) according to one or more of Claims 3 to 8, **characterized in that** a voltage regulator (25) is provided for generating the idle voltage (U2) and is connected to the operating voltage (U1) as the input voltage.

10. The electric-motor furniture drive (1) according to Claim 9, **characterized in that** the idle voltage (U2) is continuously connected to the output of the power supply device (5), wherein in the operating state the operating voltage (U1) is switched in.

11. The electric-motor furniture drive (1) according to one or more of the preceding claims, **characterized in that** the power supply device (5) has a display unit (20) for displaying the operating voltage (U1) and the idle voltage (U2).

12. The electric-motor furniture drive (1) according to one or more of the preceding claims, **characterized in that** the motor controller (6) and/or the manual control (7) is/are provided with an auxiliary power source.

13. The electric-motor furniture drive (1) according to Claim 12, **characterized in that** the auxiliary power source is a battery, and accumulator, and/or a capacitor.

## Revendications

1. Entraînement de meuble à moteur électrique (1) avec un dispositif d'alimentation en énergie (5) et avec une commande manuelle (7) pour le réglage de parties de meuble mobiles les unes par rapport aux autres,
dans lequel l'entraînement de meuble à moteur électrique (1) présente au moins un moteur électrique à sens de rotation inversable, chaque moteur étant suivi d'un engrenage réducteur de vitesse de rotation et chaque engrenage réducteur de vitesse de rotation étant suivi d'un autre engrenage,
et dans lequel le dispositif d'alimentation en énergie (5) présente un raccordement au secteur par un câble secteur (110) qui est conçu pour pouvoir être raccordé à un réseau d'alimentation en énergie (100), le dispositif d'alimentation en énergie (5) transformant la tension propre du secteur en au moins une basse tension en sortie et comportant un transformateur sectionneur connecté à haute fréquence ou une unité de transmission pour la séparation galvanique (16) entre le côté d'entrée raccordé au secteur et le côté de sortie délivrant la basse tension pour le fonctionnement de l'entraînement de meuble à moteur électrique (1), le dispositif d'alimentation en énergie (5) étant conformé comme un bloc d'alimentation secteur et comportant un circuit intermédiaire (11), un dispositif de commande (15) pour la commande du bloc d'alimentation secteur et une unité secondaire (13), le dispositif d'alimentation en énergie (5) présentant un état de fonctionnement quand l'entraînement de meuble à moteur électrique (1) fonctionne normalement et un état de repos quand l'entraînement de meuble à moteur électrique (1) n'est pas actionné, le dispositif d'alimentation en énergie (5) fournissant à sa sortie, dans son état de fonctionnement, une tension de fonctionnement en sortie (U1) et dans son état de repos, au lieu de la tension de fonctionnement (U1), une tension de repos en sortie (U2),
**caractérisé en ce que** le dispositif d'alimentation en énergie (5) est muni d'une charge initiale commutable et/ou variable, qui est conçue et peut être raccordée temporairement aux branchements du câble secteur (110) du dispositif d'alimentation en énergie (5) de manière à créer une identification sans équivoque de l'état de fonctionnement du dispositif d'alimentation en énergie (5) pour un disjoncteur secteur (9) qui crée une disjonction du secteur à un niveau supérieur, le disjoncteur secteur (9) étant inséré entre le réseau d'alimentation en énergie (100) et le câble secteur (110) du dispositif d'alimentation en énergie (5) et réalisant un sectionnement ou un raccordement du dispositif d'alimentation en énergie (5) avec le réseau d'alimentation en énergie (100).

2. Entraînement de meuble à moteur électrique (1) selon la revendication 1, **caractérisé en ce que** le dispositif d'alimentation en énergie (5) comporte en outre une unité de reconnaissance de la charge (17) avec un capteur (21) et un bloc de commande (19), lequel bloc de commande (19) est relié à une unité de reconnaissance de la tension de référence de l'unité secondaire (13) et étant conçu pour commuter la tension de fonctionnement en sortie (U1) en tension de repos en sortie (U2).

3. Entraînement de meuble à moteur électrique (1) selon la revendication 1, **caractérisé en ce que** le dispositif d'alimentation en énergie (5) comporte en outre une unité de reconnaissance de la charge (17) avec un capteur (21) et un bloc de commande (19), lequel bloc de commande (19) est relié à une unité de commutation (24) de l'unité secondaire (13) pour commuter la tension de fonctionnement en sortie (U1) en tension de repos en sortie (U2).

4. Entraînement de meuble à moteur électrique (1) selon la revendication 3, **caractérisé en ce que** l'unité de commutation (24) comporte un élément de commutation (24b) qui commute en sortie, dans l'état hors tension, la tension de repos (U2) vers la sortie du dispositif d'alimentation en énergie (5).

5. Entraînement de meuble à moteur électrique (1) selon une ou plusieurs des revendications précédentes, **caractérisé en ce que** l'unité de reconnaissance de la charge (17) comprend un comparateur (22).

6. Entraînement de meuble à moteur électrique (1) selon la revendication 5, **caractérisé en ce que** le comparateur (22) est relié à une unité de référence (23).

7. Entraînement de meuble à moteur électrique (1) selon la revendication 6, **caractérisé en ce que** l'unité de référence (23) comprend une source de courant constant.

8. Entraînement de meuble à moteur électrique (1) selon la revendication 7, **caractérisé en ce que** la source de courant constant de l'unité de référence (23) comporte deux trajets de courant parallèles avec une paire de transistors PNP (T1, T2) et une paire de transistors NPN (T3, T4).

9. Entraînement de meuble à moteur électrique (1) selon une ou plusieurs des revendications 3 à 8, **caractérisé en ce qu'**il est prévu un régulateur de tension (25) destiné à produire la tension de repos (U2) et relié à la tension de fonctionnement (U1) servant de tension d'entrée.

10. Entraînement de meuble à moteur électrique (1) selon la revendication 9, **caractérisé en ce que** la tension de repos (U2) est reliée en permanence à la sortie du dispositif d'alimentation en énergie (5), la tension de fonctionnement (U1) étant connectée en plus dans l'état de fonctionnement.

11. Entraînement de meuble à moteur électrique (1) selon une ou plusieurs des revendications précédentes, **caractérisé en ce que** le dispositif d'alimentation en énergie (5) comporte une unité d'affichage (20) pour l'affichage de la tension de fonctionnement (U1) et de la tension de repos (U2).

12. Entraînement de meuble à moteur électrique (1) selon une ou plusieurs des revendications précédentes, **caractérisé en ce que** la commande du moteur (6) et/ou la commande manuelle (7) sont munies d'une source d'énergie auxiliaire.

13. Entraînement de meuble à moteur électrique (1) selon la revendication 12, **caractérisé en ce que** la source d'énergie auxiliaire est une batterie, un accumulateur et/ou un condensateur.
